Europäisches Patentamt

European Patent Office

Office européen des brevets

(11) Veröffentlichungsnummer: **0 390 096**

**A2**

## (12) EUROPÄISCHE PATENTANMELDUNG

(21) Anmeldenummer: **90105860.2**

(22) Anmeldetag: **28.03.90**

(51) Int. Cl.⁵: **B23Q 3/10**

(30) Priorität: **31.03.89 DE 8903929 U**

(43) Veröffentlichungstag der Anmeldung:
**03.10.90 Patentblatt 90/40**

(84) Benannte Vertragsstaaten:
**AT BE CH DE FR LI LU NL**

(71) Anmelder: **Mauel, Volkmar**
**Jakobusstrasse 8**
**D-5167 Jakobwüllesheim(DE)**

(72) Erfinder: **Mauel, Volkmar**
**Jakobusstrasse 8**
**D-5167 Jakobwüllesheim(DE)**

(74) Vertreter: **Liermann, Manfred**
**Josef-Schregel-Strasse 19**
**D-5160 Düren(DE)**

(54) **Vorrichtung zum Spannen von Werkstücken.**

(57) Die Erfindung betrifft eine Vorrichtung zum Spannen von Werkstücken auf einem Spannuten zum Eingriff von Spannhilfsmitteln aufweisenden Spanntisch, z.B. einer Werkzeugmaschine, die einen prismatischen Körper aufweist, der eine Mittelachse aufweist und von geraden Kanten begrenzt wird, welche die Seitenflächen und Stirnflächen des Körpers umschließen, mit wenigstens einer Bohrung mit kreisrundem Querschnitt, die den Körper zumindest teilweise durchdringt und von einer der Flächen ausgeht und/oder wenigstens einer Nut mit rechteckigem Querschnitt, die eine der Flächen durchläuft, wobei sich die Bohrung und/oder die Nut jeweils parallel und im Abstand zu mehreren der Kanten erstreckt, sowie wenigstens einen von einem Druckmittel beaufschlagbaren Zylinder, der senkrecht zu einer Ebene, in der eine Stirnfläche liegt, orientiert ist und in den Körper integriert oder über wenigstens einen Teil von einer der Seitenflächen mit dem Körper starr oder lösbar verbunden ist und dessen Kolbenstange mit Spannhilfsmitteln verbindbar ist.

EP 0 390 096 A2

## Vorrichtung zum Spannen von Werkstücken

Die Erfindung betrifft eine Vorrichtung zum Spannen von Werkstücken auf einem Spanntisch, welcher Spannuten zum Eingriff von Spannhilfsmitteln aufweist. Hierbei handelt es sich insbesondere um einen Spanntisch von Werkzeugmaschinen. Ein solcher Spanntisch weist auf seiner Oberseite eine Mehrzahl von Spannuten auf, die jeweils parallel und im gegenseitigen Abstand zueinander verlaufen. Diese Nuten haben einen "T-förmigen" Querschnitt und sind zum Eingriff von Spannhilfsmitteln geeignet. Übliche Spannhilfsmittel sind beispielsweise"T-Steine", Paßfedern, Spanneisen sowie Gewindebolzen oder -stäbe, welchletztere in die mit einem Innengewinde versehenen "T-Steine" eingreifen.

Diese bekannten und üblicherweise benutzten Spannhilfsmittel weisen oft geringe Formsteifigkeit auf und sind wegen der nur locker zusammenhängenden Einzelteile unhandlich im Gebrauch. Aber nicht nur beim Spannen auf Spanntischen von Bearbeitungsmaschinen treten diese Nachteile auf, sondern auch beim Aufspannen von Werkstücken zu deren Vermessung oder zum Anreißen.

Weiterhin sind mechanische oder hydraulisch betätigte Schraubstöcke bzw. Spannstöcke bekannt, die auf einer Schlittenführung z.B. eine feste und eine verschiebliche Backe aufweisen. Solche Einrichtungen haben in der Regel ein hohes Gewicht und sind in ihrer Spannfähigkeit räumlich auf den reltaiv kleinen Abstand zwischen den beiden Spannbacken beschränkt. Nur sehr einfach geformte Körper kleinerer Abmessungen sind einspannbar. Die Abmessungen des Aufspanntisches von Werkzeugmaschinen für eine Aufspannung entsprechend großer Werkstücke ist nicht ausnutzbar.

Die Erfindung hat sich daher die Aufgabe gestellt, die genannten Nachteile der bekannten Spannhilfsmittel zu vermeiden und eine Vorrichtung anzugeben, mit deren Hilfe Werkstücke von beliebiger Form und Formsteifigkeit schnell und zuverlässig und mit großer Genauigkeit in allen möglichen Spannlagen aufgespannt werden können. Gleichzeitig soll die erfindungsgemäße Vorrichtung einfach zu handhaben und auch preisgünstig in ihrer Anschaffung sein.

Diese Aufgabe wird durch einen prismatischen Körper gelöst, der eine Mittelachse aufweist und von geraden Kanten begrenzt wird, welche die Seitenflächen und Stirnflächen des Körpers umschließen. Bei dem erfindungsgemäßen prismatischen Körper werden die Flächen jeweils von geraden Kanten begrenzt und daraus folgt, daß es sich jeweils um ebene Flächen handelt. Zur Erleichterung der Orientierung bzw. zur Vereinfachung der Angabe der Lage von einzelnen Teilen des prismatischen Körpers wird nachfolgend davon ausgegangen, daß der erfindungsgemäße Körper auch eine mittlere Längsachse -nachfolgend Mittelachse genanntaufweist. Die geraden Kanten begrenzen also die Seiten- und Stirnflächen des prismatischen Körpers und umschließen dabei gleichzeitig dessen Mittelachse. Im einfachsten Ausführungsfall besteht der erfindungsgemäße prismatische Körper aus einem länglichen Vierkantblock, der wie ein Würfel sechs Seiten aufweist. Von diesen sechs Seiten bilden vier Seiten die Seitenflächen und zwei Seiten die kleineren Stirnflächen.

Weiterhin weist der erfindungsgemäße prismatische Körper mindestens eine, vorzugsweise aber eine Mehrzahl von Bohrungen mit kreisrundem Querschnitt auf, die den Körper zumindest teilweise durchdringen und auf einer seiner Flächen vorgesehen sind. Hierbei handelt es sich um Vollbohrungen, d.h. um Bohrungen, welche nicht von einer der Kanten des Körpers durchdrungen werden. Diese Bohrungen verlaufen geradlinig und sind jeweils parallel und im Abstand zu mehreren der den Körper bildenden Kanten angeordnet und damit auch gleichzeitig im Abstand und parallel zu mehreren der Flächen.

Zusätzlich kann der erfindungsgemäße prismatische Körper zu den Bohrungen oder anstelle der Bohrungen auch Nuten aufweisen, die einen rechteckigen Querschnitt haben und eine der Flächen durchlaufen. Auch für die Nuten gilt, daß sie die Flächen parallel und im Abstand zu mehreren Kanten gleichzeitig durchlaufen, wobei natürlich die Abstände zu den einzelnen Kanten unterschiedlich groß sind. Auch die Nuten sind so angeordnet, daß sie von den einzelnen Kanten, die den prismatischen Körper bilden, nicht durchdrungen werden.

Schließlich weist der erfindungsgemäße prismatische Körper noch einen Zylinder auf, der von einem Druckmittel beaufschlagbar ist. Dieser Zylinder ist senkrecht zu einer Ebene, in der eine der Stirnflächen liegt, orientiert und kann in den prismatischen Körper integriert sein oder über eine der Seitenflächen oder einen Teil der Seitenfläche mit dem Körper starr oder lösbar verbunden sein. Die Kolbenstange des Zylinders ist dazu vorgesehen, mit weiteren Spannhilfsmitteln verbunden zu werden.

Gegenüber den bekannten üblichen Spannmitteln zeichnet sich der erfindungsgemäße prismatische Körper durch eine große Einfachheit seiner Form und eine hohe Formsteifigkeit aus. Die Nuten und Bohrungen sind zum Eingriff von weiteren Spannhilfsmitteln vorgesehen. Im Falle der Ausbildung der Bohrungen als Durchgangsbohrungen sind diese Bohrungen zum Hindurchführen von Gewindebolzen geeignet, über welche der erfindungsgemäße prismatische Körper mit den "T-Steinen" verschraubt werden kann, welche in den "T-Nuten" des Spanntisches verschiebbar geführt sind. Ähnliches gilt für die Ausführung der Bohrungen als Gewindebohrung, über welche ein prismatischer Körper mit weiteren erfindungsgemäßen prismatischen Körpern verschraubt werden kann. Dadurch können auf einfache Weise eine Mehrzahl von erfindungsgemäßen prismatischen Körpern von gleicher oder unterschiedlicher äußerer Gestalt miteinander zu einer Gesamtvorrichtung verbunden werden, wie sie beispielsweise zum Spannen von großen Werkstücken oder von Werkstücken mit komplizierten Formen benötigt wird.

Ähnliches wie für die Bohrungen gilt auch für die Nuten, die die Oberfläche des prismatischen Körpers durchziehen und für den Eingriff von Paßfedern z.B. als Spannhilfsmittel vorgesehen sind. Die Paßfedern sind dazu geeignet, bei entsprechender Lage des prismatischen Körpers Spannkräfte, die in der Richtung von einer den Körper begrenzenden Fläche oder parallel zu dieser orientiert sind, aufzunehmen und z.B. auf den Spanntisch zu übertragen.

Erfindungsgemäß ist vorgesehen, daß jeweils die Bohrungen und auch die Nuten gleich große Abstände voneinander haben. Diese Abstände sind regelmäßig, jedoch können die gegenseitigen Abstände der Nuten unterschiedlich von den gegenseitigen Abständen der Bohrungen sein.

Nach einem weiteren Merkmal ist vorgesehen, daß die Bohrungen von wenigstens einer der Flächen gleich große Durchmesser haben. Es ist aber ebensogut möglich, daß die Bohrungen von ein und derselben Fläche abwechselnd unterschiedliche Durchmesser haben. Auch ist es möglich, daß die auf einer der Seitenfläche vorgesehenen Bohrungen Durchmesser haben, die unterschiedlich sind von den Durchmessern der Bohrungen, die auf einer anderen Seitenfläche vorgesehen sind.

Als zweckmäßig hat es sich erwiesen, wenn die Bohrungen der einzelnen Flächen jeweils in einer Reihe liegen. Diese Reihen verlaufen somit parallel und im Abstand zu den Kanten, wobei die Abstände zu den einzelnen Kanten unterschiedlich groß sein können.

In einer weiteren vorteilhaften Ausgestaltung können die Bohrungen von wenigstens einer der Seitenflächen entlang einer Reihe abwechselnd als Durchgangsbohrung und als Gewindebohrung ausgebildet sein. Darüber hinaus ist es vorteilhaft, wenn wenigstens ein Teil der Bohrungen innerhalb einer der Nuten oder an den Kreuzungspunkten von zwei Nuten mündet. Dabei kann es auch zweckmäßig sein, wenn einzelne oder alle Bohrungen mit einer Senkung versehen sind, welche dazu geeignet ist, den Schraubenkopf von Gewindebolzen bzw. von Muttern mit der jeweiligen Fläche des prismatischen Körpers bündig abschließen zu lassen, die zur Befestigung des prismatischen Körpers an einem weiteren Körper oder am Spanntisch vorgesehen sind und deren Herausragen aus dem prismatischen Körper störend wirken könnte.

Es ist vorgesehen, daß eine einzelne Reihe von Bohrungen, welche auf einer der Flächen des prismatischen Körpers vorgesehen ist, diese Fläche mittig unterteilt. Das muß aber nicht so sein, denn bei einer Vielzahl von Spannoperationen kann es vorteilhaft sein, wenn die Bohrungen außermittig angeordnet sind, d.h., wenn der Abstand der Reihe von Bohrungen zu den jeweiligen Körperkanten unterschiedlich groß ist. Hierbei können besonders günstige Spannverhältnissse erzielt werden, je nach dem wie die Spannkräfte angreifen, so daß auf diese Weise eine Eigenverformung der erfindungsgemäßen Vorrichtung beim Aufbringen von großen Spannkräften oder beim Aufbringen von Spannkräften über größere Abstände möglichst gering bleibt.

Zweckmäßig ist es auch, wenn die Nuten des prismatischen Körpers die gleiche Breite aufweisen wie die Öffnungsbreite der Spannnuten des Spanntisches. Damit ist eine vorteilhafte Anpassung der erfindungsgemäßen Vorrichtung an die üblicherweise in ihren Abmessungen genormten Spannnuten der Spanntische möglich und das Verbinden der erfindungsgemäßen Vorrichtungen mit dem Spanntisch über Paßfedern wird auf diese Weise vorteilhaft vereinfacht.

Jeder Spannzylinder, der ein Teil des erfindungsgemäßen prismatischen Körpers ist, kann nach einer bevorzugten Ausführungsform in diesen Körper integriert sein. Dabei erstreckt sich jeder Spannzylinder von einer der Stirnflächen des Körpers ausgehend in das Innere des Körpers. Üblicherweise ist es ausreichend, wenn dem Körper nur ein einzelner Spannzylinder zugeordnet ist. Es können aber auch mehrere Spannzylinder vorgesehen sein.

Nach einer anderen bevorzugten Ausführungsform ist der Spannzylinder mit einer der Seitenflächen des Körpers starr verbunden. Dabei kann der Zylinder innerhalb eines prismatischen Gehäuses angeordnet sein, welches einstückig mit dem prismatischen Körper ausgebildet ist. Das prismatische Gehäuse für den Zylinder ist zweckmäßig an einer der Seitenflächen des prismatischen Körpers vorgesehen und erstreckt sich wenigstens über einen Teil der betreffenden Seitenfläche. Anstelle der gehäusemäßigen Integration kann auch ein üblicher druckmittelbeaufschlagbarer Zylinder über Verschraubungen mit dem prismatischen Körper verbunden sein. In dieser Weise ausgeführte Verbindungen zwischen dem Zylinder und dem prismatischen Körper sind ausreichend starr und dauerhaft.

Daneben ist aber auch eine andere Art der Verbindung zwischen dem Zylinder und dem prismatischen Körper vorgesehen in der Art, daß das Gehäuse, welches den Zylinder aufnimmt, mit einem seitlichen Fortsatz versehen ist, der zum Eingriff in die Bohrungen oder einen Teil der Bohrungen des prismatischen Körpers geeignet ist. Ein solcher Eingriff erfolgt mit geringem Spiel, so daß das Gehäuse mit dem prismatischen Körper durch einfaches Einstecken des Fortsatzes in die genannte Bohrung lösbar verbunden werden kann. Der Fortsatz überträgt sodann die von dem Zylinder ausgeübten Spannkräfte auf den prismatischen Körper. Der Querschnitt des Fortsatzes ist so gewählt, daß die Verbindung zwischen dem Zylinder und dem prismatischen Körper ausreichend starr ist.

Es ist ausreichend, wenn der Kolben des die Spannkräfte erzeugenden Zylinders einseitig mit Druckmittel beaufschlagbar ist. Die Eigenreibung eines solchen Zylinders ist in der Regel klein, so daß der nicht beaufschlagte Kolben mühelos von Hand in den Zylinder hineingedrückt oder daraus herausgezogen werden kann. Die einseitige Beaufschlagung vereinfacht die Anordnung der für die Beaufschlagung des Zylinders mit dem Druckmittel erforderlichen Anschlüsse in den prismatischen Körper. Natürlich kann, insbesondere wenn es sich um Spannzylinder mit großen Abmessungen handelt, auch vorgesehen sein, daß der Spannzylinder zweiseitig beaufschlagt wird. In demgemäß großen erfindungsgemäßen Vorrichtungen ist auch die Anordnung von den für die Zuführung und den Abfluß des Druckmittels erforderlichen Anschlüssen aufgrund der großen Abmessungen problemlos.

Als Druckmittel zur Betätigung der Spannzylinder sind Hydraulikflüssigkeit oder Druckluft vorgesehen.

Weiter ist vorgesehen, daß die Kolbenstange des Zylinders eine Bohrung aufweist, die sich in Richtung der Längsachse des Zylinders erstreckt. Diese Bohrung kann mit einem Innengewinde versehen sein, so daß die Kolbenstange mit weiteren Spannhilfsmitteln durch Verschraubung verbunden werden kann. Im einfachsten Ausführungsfalle ist als Bohrung in der Kolbenstange des Zylinders eine Sackbohrung vorgesehen, in welche die weiteren erforderlichen Spannhilfsmittel einfach durch Einstecken eingeführt werden. Aber auch eine Bohrung, die ein Innengewinde aufweist, eignet sich dafür, Spannhilfsmittel aufzunehmen, welche ihrerseits ein Gewinde nicht aufweisen.

Die vorteilhaften Ausgestaltungen der erfindungsgemäßen Vorrichtung ergeben sich aus den einzelnen Unteransprüchen.

Nachfolgend wird die Erfindung anhand von einigen Ausführungs- und Anwendungsbeispielen näher erläutert.

Es zeigen jeweils in nicht maßstäblicher und vereinfachter Darstellung die

Figur 1 eine erste Ausführungsform der erfindungsgemäßen Vorrichtung in der Seitenansicht (Fig. 1 a), Draufsicht (Fig. 1 b) und Vorderansicht (Fig. 1 c)

Figur 2 eine Einzelheit der Vorrichtung nach Fig. 1 teilweise im Schnitt (Fig. 2 a) und in der Draufsicht (Fig. 2 b),

Figur 3 Einzelteile eines Zylinders, nämlich teilweise im Schnitt den Gehäusedeckel (Fig. 3 c), den Kolben (Fig. 3 b) und den Kolbenstangendeckel (Fig.3 a),

Figur 4 einen prismatischen Spannstein in den drei Ansichten Seitenansicht (Fig. 4 a), Stirnseite (Fig. 4 b) und Draufsicht (Fig. 4 c),

Figur 5 einen zweiten prismatischen Spannstein in den drei Ansichten Seitenansicht (Fig. 5 a), Stirnseite (Fig. 5 b) und Draufsicht (Fig. 5 c),

Figur 6 einen kegelförmigen Spannstein in zwei Ansichten, nämlich der Seitenansicht (Fig. 6 a) und Draufsicht (Fig. 6 b),

Figur 7 Spannaufbau mit zwei prismatischen Körpern und Werkstück in der Seitenansicht,

Figur 8 Spannaufbau in der Seitenansicht mit einem einzelnen prismatischen Körper und Werkstück

Figur 9 Spannaufbau mit zwei prismatischen Körpern in der Seitenansicht und Werkstück

Figur 10 Spannaufbau mit vier prismatischen Körpern in der Seitenansicht (Fig. 1 0 a) und in der Draufsicht (Fig. 10 b), mit Werkstück

Figur 11 Spannaufbau in der Seitenansicht, mit Werkstück

Figur 12 Spannaufbau in der Draufsicht, mit Werkstück

Figur 13 Spannaufbau in der Draufsicht, mit Werkstück

Figur 14 eine Ausführungsform der erfindungsgemäßen Vorrichtung in der Seitenansicht (Fig. 14a) mit Einzelteilen (Fig. 14b, c),

Figur 15 eine Ausführungform des Spannzylinders in der Seitenansicht (Fig. 15a) und der Draufsicht (Fig. 15b),

Figur 16 Spannaufbau in der Seitenansicht, mit Werkstück

Figur 17 Spannaufbau in der Seitenansicht, mit Werkstück

Figur 18 ein Spannhilfsmittel mit Ansicht der Stirnseite (Fig. 18a) und der Seite (Fig. 18b).

Figur 19 Ansicht ähnlich Fig. 7 jedoch mit aufgesetztem prismatischem Körper als Spannelement.

Figur 20 Ansicht in Richtung des Pfeils A nach Fig. 19

Figur 21 Joch in Seitenansicht

Figur 22 Ansicht in Richtung des Pfeils B in Fig. 21

Figur 23 Kombination von Spannelementen in Draufsicht

Figur 24 Ansicht in Richtung des Pfeils C nach Fig. 23

Figur 25 Spannelement mit zusätzlicher Aufnahmebohrung in Seitenansicht.

Figur 26 Spannelement mit doppeltem Spannzylinder in Seitenansicht.

In einer ersten Ausführungsform sieht die erfindungsgemäße Vorrichtung einen prismatischen Köper 1 vor, der die Form eines langgestreckten Würfels hat und von den Längskanten 2, 3, 4, und 5 sowie von den Stirnkanten 6, 7, 8, und 9 begrenzt wird. Die Kanten 2 bis 9 sind jeweils gerade, wobei die Längskanten 2 bis 5 die Seitenflächen 10, 11, 12 und 13 und die Stirnkanten 6 bis 9 die Stirnflächen 14 und 15 umschließen. Die Seitenflächen 10 bis 13 umschließen außerdem die Mittelachse 16 des prismatischen Körpers 1. Der prismatische Körper 1 wird von mehreren Bohrungen 17 bis 23 durchdrungen, welche insgesamt als Durchgangsbohrungen ausgebildet sind. Dabei sind die Bohrungen 17, 18, 19 und 20 auf der Seitenfläche 10 vorgesehen und durchdringen den prismatischen Körper 1 parallel zu den Stirnkanten 24, 25, 26 und 27, um auf der Seitenfläche 13, welche der Seitenfläche 10 gegenüberliegt, wieder aus dem prismatischen Körper 1 auszutreten.

Der prismatische Körper 1 wird von den einander benachbarten Seitenflächen 10, 11, 12 und 13 umschlossen, wobei die Seitenflächen 10 und 13 sowie 11 und 12 jeweils einander gegenüberliegen. Den stirnseitigen Abschluß bilden die beiden Stirnflächen 14 und 15, die einander ebenfalls gegenüberliegen. Sowohl die Seitenflächen 10 bis 13 als auch die Stirnflächen 14 und 15 sind zueinander parallel. Die Seitenfläche 10 wird ihrerseits durch die beiden Längskanten 2 und 4 und die beiden Stirnkanten 6 und 7 begrenzt Die Seitenfläche 11 wird durch die beiden Längskanten 2 und 3 sowie die beiden Stirnkanten 24 und 25, wobei die Stirnkante 25 verdeckt ist, begrenzt. Die Seitenfläche 12 wird durch die beiden Längskanten 2 und 5 sowie die beiden Stirnkanten 26 und 27 begrenzt. Die Seitenfläche 13 wird durch die beiden Längskanten 3 und 5 sowie die beiden Stirnkanten 6 und 9 begrenzt. Die Begrenzung der Seitenfläche 10 bilden die beiden Längskanten 2 und 4 sowie die beiden Stirnkanten 6 und 7.

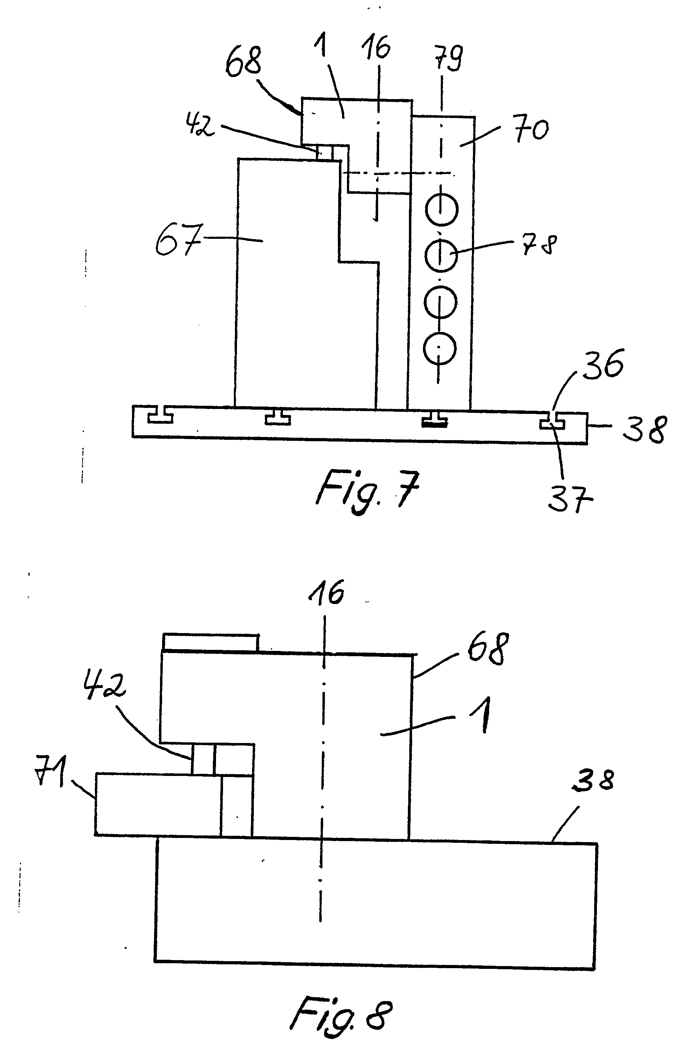

Die Seitenflächen 10, 12 und 13 werden außerdem noch von den zueinander prallelen Längsnuten 28, 29 und 30 und den Quernuten 31 und 32 durchzogen. An den Kreuzungspunkten 33 sind jeweils die Bohrungen 17, 18, 19 und 20 vorgesehen, so daß deren jeweilige Mündungen gegenüber der Ebene der Seitenflächen 10 und 13 versenkt sind. Auch die Stirnseite 15 weist eine Nut 34 auf, auf deren Grund die jeweiligen durchgehenden Bohrungen 21 und 22 münden, die ihrerseits parallel zu den Längskanten 2, 3, 4 und 5 die entsprechenden Oberflächen des prismatischen Körpers 1 durchziehen. Die Nuten 28 bis 32 und 34 haben jeweils den gleichen rechteckigen Querschnitt. Die Öffnungsweite 35 dieses Querschnitts entspricht der Öffnungsweite 36 der Spannnuten 37, die am Spanntisch 38 vorgesehen sind (Fig. 7). Die Bohrungen 17 bis 23 sind zueinander parallel bzw. kreuzen einander und das gleiche gilt für die Nuten 28 bis 32 und 34.

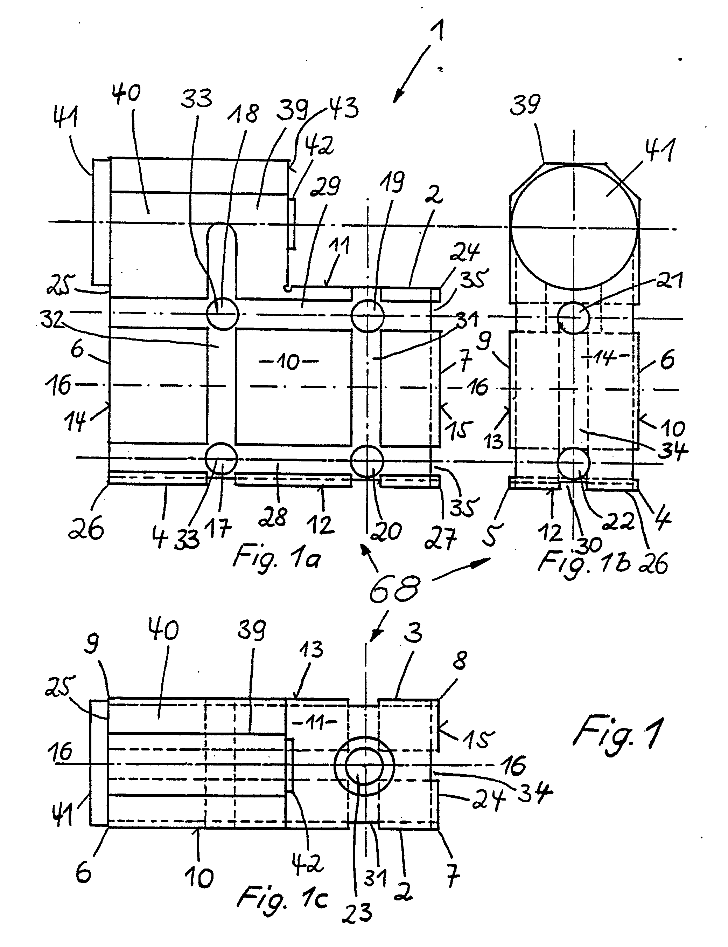

Über einen Teil der Seitenfläche 11 mit dem prismatischen Körper 1 einstückig verbunden ist ein prismatisches Gehäuse 39, welches einen Spannzylinder 40 aufnimmt, von dem in der Fig. 1 auch der Zylinderdeckel 41 und das Ende der Kolbenstange 42 erkennbar sind. Die den Zylinderdeckel 41 aufnehmende Stirnseite des prismatischen Gehäuses 39 ist die Fortsetzung der Stirnfläche 14 des prismatischen Körpers 1. Die gegenüberliegende Stirnseite 43 des prismatischen Gehäuses 39 ist zur Stirnfläche 15 des prismatischen Körpers parallel und springt von der Stirnfläche 15 aus zurück, wie das in der Seitenansicht Fig. 1a und Draufsicht Fig. 1c deutlich erkennbar ist.

Innerhalb des prismatischen Gehäuses 39 ist eine Längsbohrung 44 vorgesehen, welche zur Mittelachse 16 des prismatischen Körpers 1 parallel verläuft und von der Mittelachse 16 einen Abstand 45 aufweist. Die Längsbohrung 44 dient zur Aufnahme und Führung eines Kolbens 46, der eine Ringnut 47 aufweist, in welche ein Dichtring (nicht gezeigt) eingelegt wird, der im zusammengebauten Zustand des von der Längsbohrung 44 und dem Kolben 46 gebildeten Zylinders 40 auf der Innenwand der Längsbohrung 44 entlanggleitet. Den kolbenseitigen Abschluß des Zylinders 40 bildet der Deckel 41, der über Gewindebohrungen 49 mit dem prismatischen Gehäuse 39 verschraubt wird. Der Deckel 41 weist eine Ringnut 50 zur Aufnahme eines O-Ringes (nicht gezeigt) auf. Auf der Seite der Kolbenstange 42 ist zum Verschluß der Längsbohrung 44 ein weiterer Deckel 51 vorgesehen, der über die Gewindebohrungen 52 mit dem prismatischen Gehäuse 39 verschraubt wird. Die Kolbenstange tritt aus dem Deckel 51 durch eine Bohrung 53 aus, die ihrerseits wiederum eine Ringnut 54 aufweist, zur Aufnahme eines O-Ringes (nicht gezeigt).

Der Schaft des Kolbens 46 weist eine Abstufung 55 auf, auf welcher eine Rückholfeder 56 geführt ist. Im zusammengebauten Zustand des Zylinders 40 stützt sich die Rückholfeder 56 auf der Stirnseite des Kolbens 46 sowie auf der Innenseite des Deckels 51 ab. Über einen Anschluß 57, der auf der Stirnseite 14 des prismatischen Köpers 1 beginnt und innerhalb der Längsbohrung 44 in einer Austrittsöffnung 59 mündet, wird die Stirnseite des Kolbens 46 mit Druckmittel beaufschlagt.

Dabei tritt die Kolbenstange 42 aus dem Deckel 51 aus und die Rückholfeder 56 wird zusammengedrückt. Beim Abschalten des Druckmittels wird sodann die Kraft der zusammengedrückten Rückholfeder 56 wirksam, wobei die Rückholfeder 56 den Kolben 46 in den Zylinder 40 wieder einführt. Das Druckmittel strömt dann über den Anschluß 57 auch wieder zurück, der neben dem Anschluß 60 auf der Stirnfläche 14 des prismatischen Körpers 1 angeordnet ist. Die Kraft der Rückholfeder 56 reicht aus, die Reibung der in den Ringnuten 53 und 54 angeordneten Dichtungsringe zu überwinden und das Druckmittel aus dem Anschluß 57 auszuschieben. Der Anschluß 60 wird als Entlüftung benutzt.

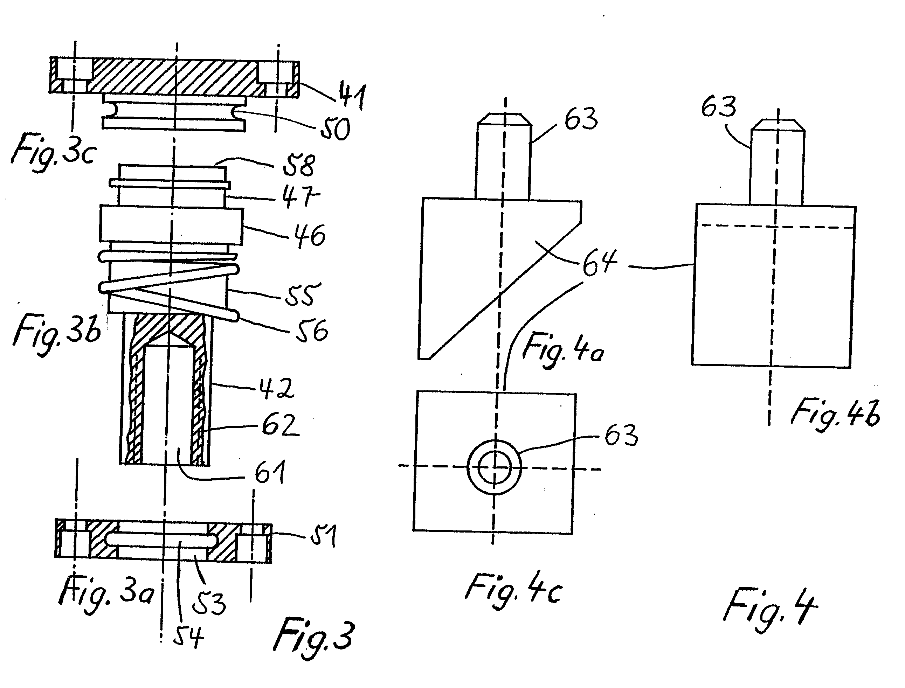

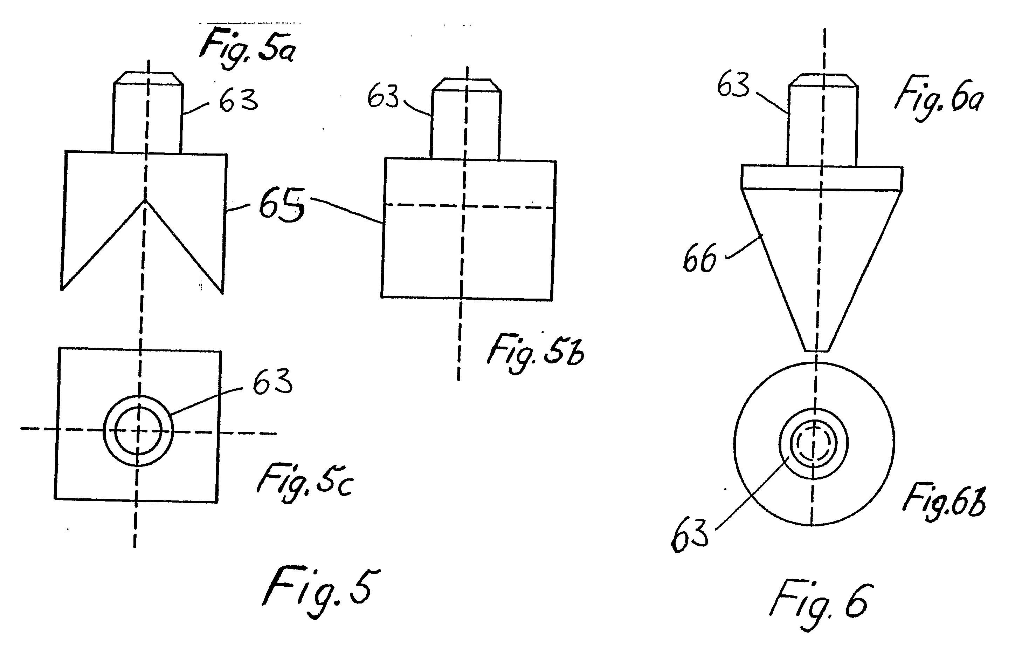

Die Kolbenstange 46 weist auch noch eine Längsbohrung 61 auf, die auch mit einem Innengewinde 62 ausgestattet sein kann. Die Längsbohrung 61 dient zur Aufnahme eines Zapfens 63, welcher Teil eines prismatischen Spannstücks 64 oder 65 oder Teil eines kegeligen Spannstücks 66 ist (Fig. 4, 5 und 6).

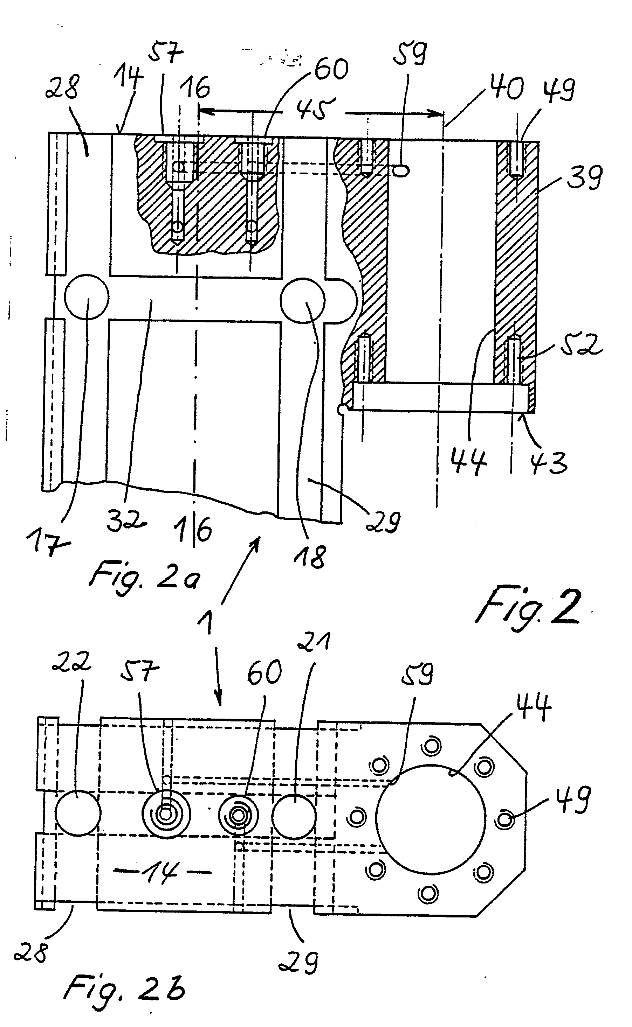

Die Fig. 7 zeigt ein Werkstück 67, welches von der erfindungsgemäßen Vorrichtung 68, die an dem prismatischen Körper 70 befestig ist, auf einem Spanntisch 38 gehalten wird. Die Vorrichtung 68 entspricht dem im Zusammenhang mit den Fig. 1 und 2 beschriebenen prismatischen Körper 1 mit zugehörigen Einzelteilen. Der prismatische Körper 1 ist über in der Fig. 7 nicht weiter dargestellte Spannhilfsmittel, beispielsweise Paßfedern oder Gewindebolzen oder Schrauben, mit dem prismatischen Körper 70 verbunden.

Die Fig. 8 zeigt einen Spanntisch 38 in vereinfachter Darstellung, d.h. ohne Spannnuten 37, auf dem ein Werkstück 71 mit Hilfe der Vorrichtung 68 direkt festgespannt ist. Das Spannen des Werkstücks 71 auf dem Spanntisch 38 erfolgt über die aus der Vorrichtung 68 ausgefahrene Kolbenstange 42.

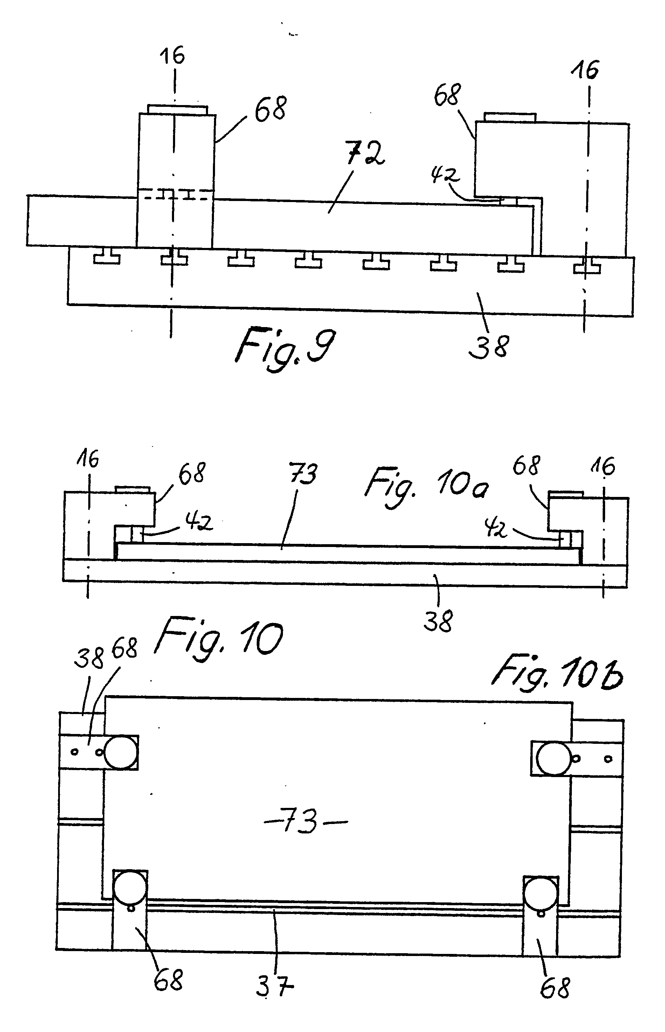

In der Fig. 9 ist ein Spanntisch 38 gezeigt, auf welchem ein Werkstück 72 mit Hilfe der beiden gleichartigen Vorrichtungen 68 aufgespannt ist.

Das in der Fig. 10 gezeigte flache Werkstück 73 wird auf dem die Spannnuten 37 aufweisenden Spanntisch 38 mit Hilfe von vier Vorrichtungen 68 der erfindungsgemäßen Art gehalten.

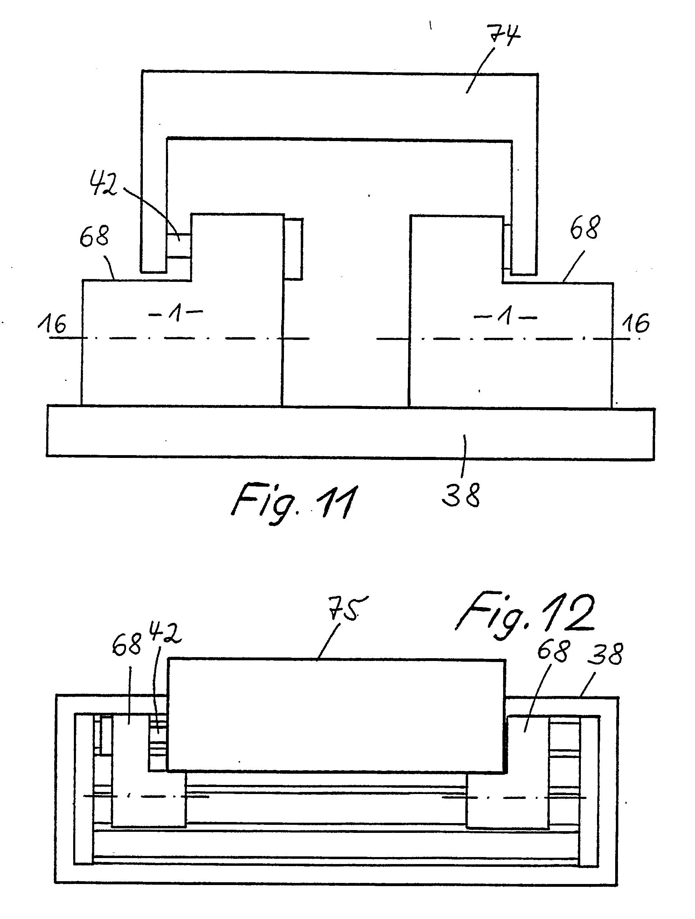

Das in der Fig. 11 gezeigte Werkstück 74 hat eine brückenartige Gestalt. Dieses Werkstück 74 wird von den beiden Vorrichtungen 68 gehalten, wobei nur eine Kolbenstange 42 zum Spannen des Werkstücks 74 ausgefahren ist. Die beiden Vorrichtungen 68 entsprechen ebenfalls der zu den Fig. 1 und 2 näher beschriebenen Vorrichtungen und sind durch in der Fig. 11 nicht näher bezeichnete Spannhilfsmittel auf dem Spanntisch 38 befestigt. Diese Spannhilfsmittel können bspws. Paßfedern sein, welche in die Nuten 37 des Spanntischs 38 und in Längsnut 30 der beiden prismatischen Körper 1 eingreifen. Es können aber auch Spannschrauben vorgesehen sein, welche durch Bohrungen 23 hindurch in die Nuten des Spanntischs 38 eingreifen.

Der Spanntisch 38 nach der Fig. 12 weist wiederum Längsnuten 37 auf, auf denen die beiden erfindungsgemäßen Spannvorrichtungen 68 beidseits eines Werkstücks 75 gehalten sind. Auch hier ist nur eine Kolbenstange 42 zum Spannen des Werkstücks 75 ausgefahren.

Auch das Spannen des Werkstücks 76 auf dem Spanntisch 38 nach ,der Fig. 13 entspricht weitgehend der Darstellung der Fig. 12, mit dem Unterschied, daß das Werkstück 36 über die beiden Vorrichtungen 68 von oben her gespannt ist. Durch die beiden Bohrungen 21 und 22 greifen jeweils Gewindebolzen (nicht näher gezeigt) in die Spannnuten 37 des Spanntischs 38 ein, wo sie mit "T-Steinen" verschraubt sind.

Alle Vorrichtungen 68 können bei Bedarf über Paßfedern Verschiebekräfte und/oder Drehmomente auffangen. Hierzu werden die Paßfedern einfach einerseits in die Nut der T-Nuten des Tisches oder in die hierfür vorgesehenen Nuten 84 des prismatischen Körpers 70 oder 70' und andererseits in die entsprechenden Nuten der Gegenfläche an der Vorrichtung 68 eingesetzt.

Der in der Fig. 14a gezeigte prismatische Körper 70 weist auf seiner Seitenfläche 77 mehrere kreisförmige Bohrungen 78 auf, die entlang der Mittelachse 79 des Körpers 77 angeordnet sind. Die der Seitenfläche 77 jeweils benachbarten Seitenflächen 80 und 81 weisen jeweils Durchgangsbohrungen 82 als Gewindebohrungen, Gewindebohrungen 83 als Sacklochbohrungen und Nuten 84 auf, wobei die Durchgangsbohrungen 82 und Gewindebohrungen 83 jeweils auf dem Grund der Nuten 84 münden. In der Darstellung der Fig. 14a hat die Mittelachse 79 zu den beiden Seitenflächen 80 und 81 jeweils den gleichen Abstand 85. Anstelle gleich großer Abstände 85 können auch unterschiedlich große Abstände (nicht gezeigt) vorgesehen sein, in welchen die Lage der Mittelachse in Bezug auf die beiden Seitenflächen 80 und 81 angeordnet ist. Diese unsymmetrische Anordnung ist vorteilhaft für die Ausführung von schwierigen Werkstückspannungen, wo es auf eine besonders ausgewogene Verteilung der Spannkraft ankommt.

In die Untere Stirnfläche 86 des prismatischen Körpers 70 ist eine Längsbohrung 87 eingelassen, welche zur Aufnahme eines Kolbens 88 dient. Der Kolben 88 hat wieder eine Ringnut 89 zur Aufnahme eines Dichtungsringes (nicht gezeigt) und eine Kolbenstange 90, welche aus einer Bohrung 91 des Deckels 92 austreten kann und wieder einfährt, wenn der Kolben 88 über die Anschlußbohrung 93 mit Druckmittel beaufschlagt wird.

Im zusammengebauten Zustand bildet der Kolben 88 mit der Bohrung 87 einen Zylinder 94, der in den prismatischen Körper 70 integriert ist. Die Kolbenstange 90 hat eine Längsbohrung 95, über welche der Zylinder 94 mit weiteren Spannmitteln, wie sie bspws. in den Fig. 4, 5 und 6 gezeigt sind, verbunden werden kann.

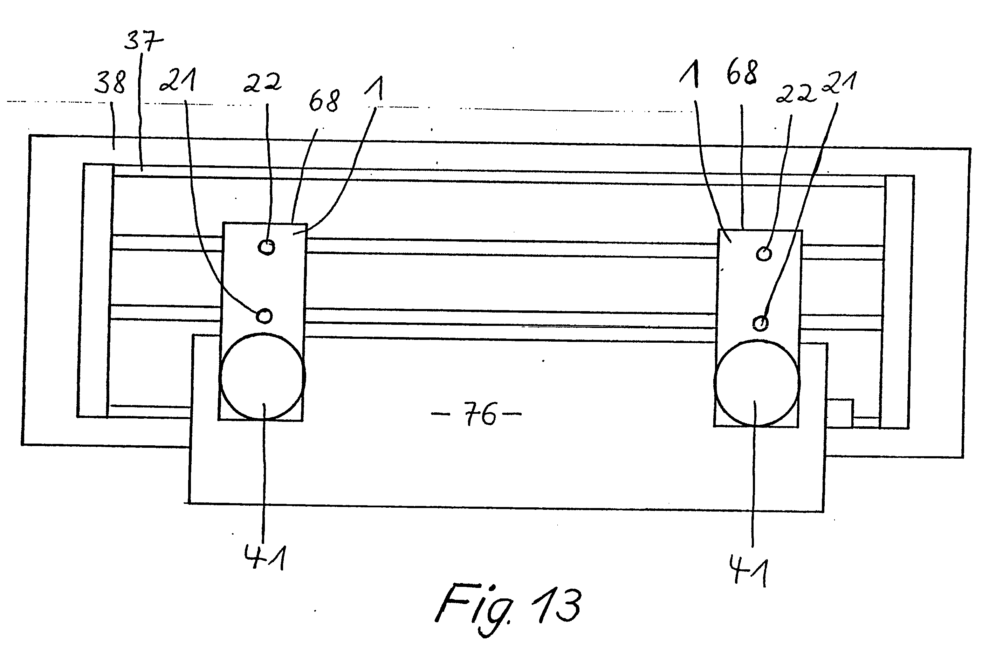

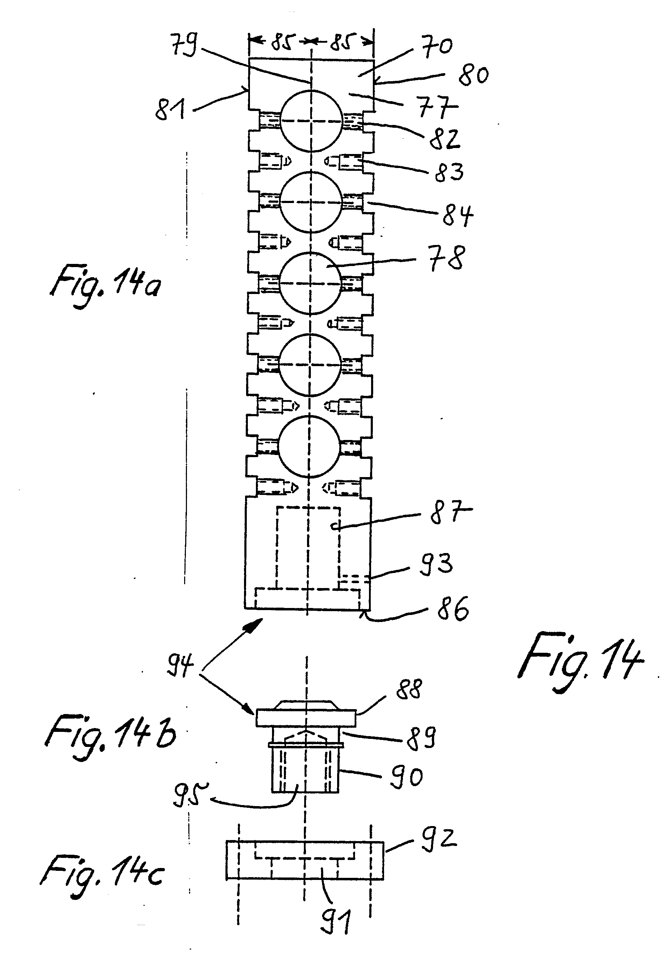

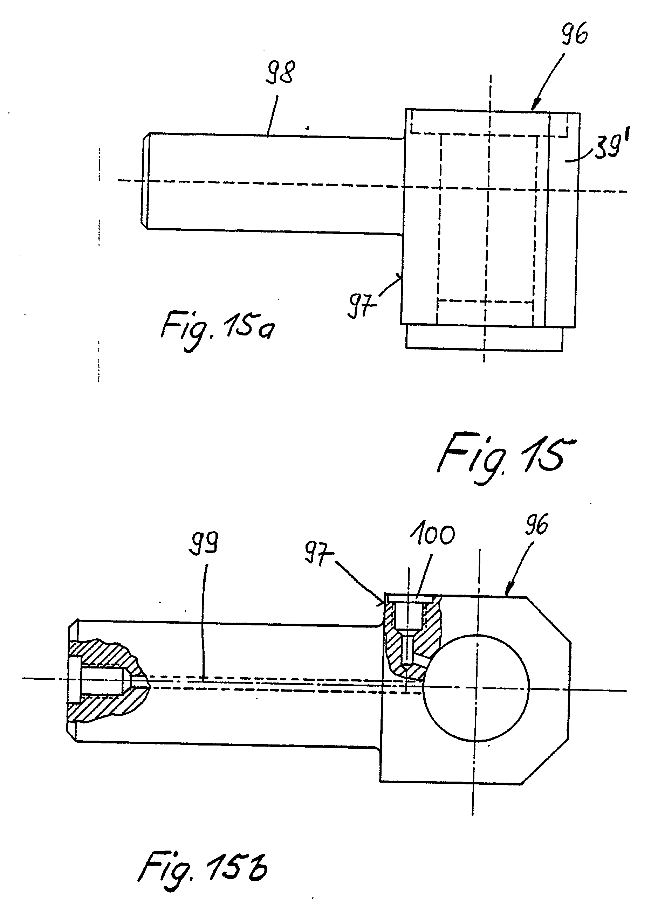

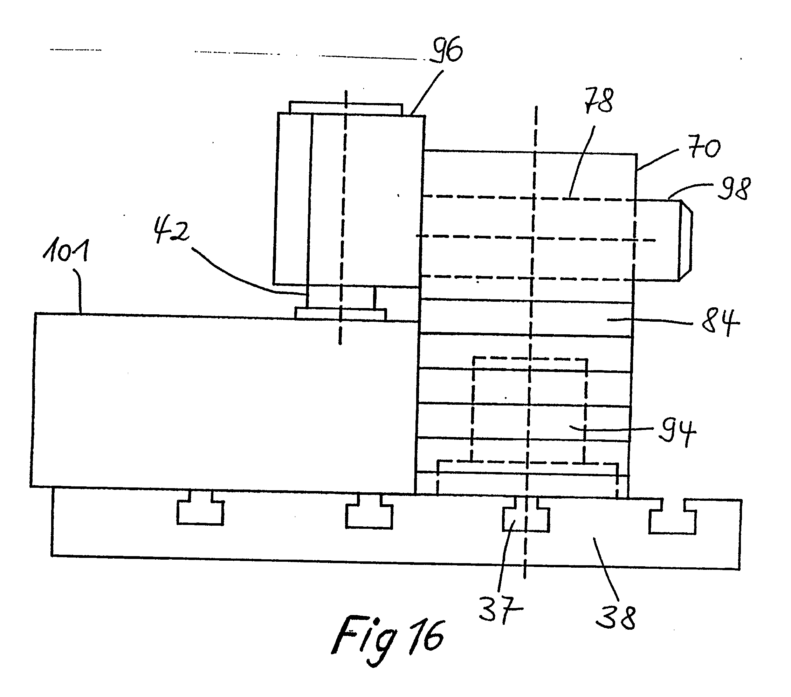

Zum Eingriff in die Durchgangsbohrungen 78 sind Zylinder 96 vorgesehen, wie sie in der Fig. 15 dargestellt sind. Die Zylinder 96 entsprechen in ihrem Aufbau dem Zylinder 48 nach den Fig. 1 und 2. Aus der körperseitigen Seitenfläche 97 des prismatischen Gehäuses 39 springt ein zylinderförmiger Fortsatz 98 hervor, der einen runden Querschnitt hat und zum Eingriff in die Durchgangsbohrungen 78 geeignet ist. Eine Anschlußbohrung 99 innerhalb des Fortsatzes 98 und eine Anschlußbohrung 100 innerhalb des prismatischen Gehäuses 39 sind zur Versorgung des Zylinders 96 mit Druckmittel und zur Entlüftung des Zylinders vorgesehen. Im Gegensatz zur Ausgestaltung nach den Fig. 1 und 2 ist der Zylinder 96 dazu vorgesehen, mit dem prismatischen Körper 70 lösbar verbunden zu werden. Damit können vielfältige Spannaufgaben gelöst werden, wovon ein Beispiel in der Fig. 16. dargestellt ist. Hier ist der Zylinder 96 mit dem Fortsatz 98 einfach in eine Bohrung 78 eingesteckt.

In der Fig. 16 ist auf einem Spanntisch 38 ein prismatischer Körper 70 beispielsweise dadurch befestigt, daß sein Zylinder 94 über die Kolbenstange 90 in die Spannut 37 eingreift und dort mit einem "T-Stein" verbunden ist. Der Kolben 88 ist über den Anschluß 93 mit Drucköl beaufschlagt und will hierdurch einfahren. Der "T-Stein" wird hierdurch gegen die obere Wand der "T-Nut" gezogen und spannt somit die ganze Einrichtung fest. In die Durchgangsbohrung 78 des prismatischen Körpers 70 ist ein Spannzylinder 96 mit seinem seitlichen Fortsatz 98 eingeführt. Die Kolbenstange 42 des Spannzylinders 96 greift an einem Werkstück 101 an, das sich auf dem Spanntisch 38 befindet und mit Hilfe des Spannzylinders 96 dort festgespannt wird.

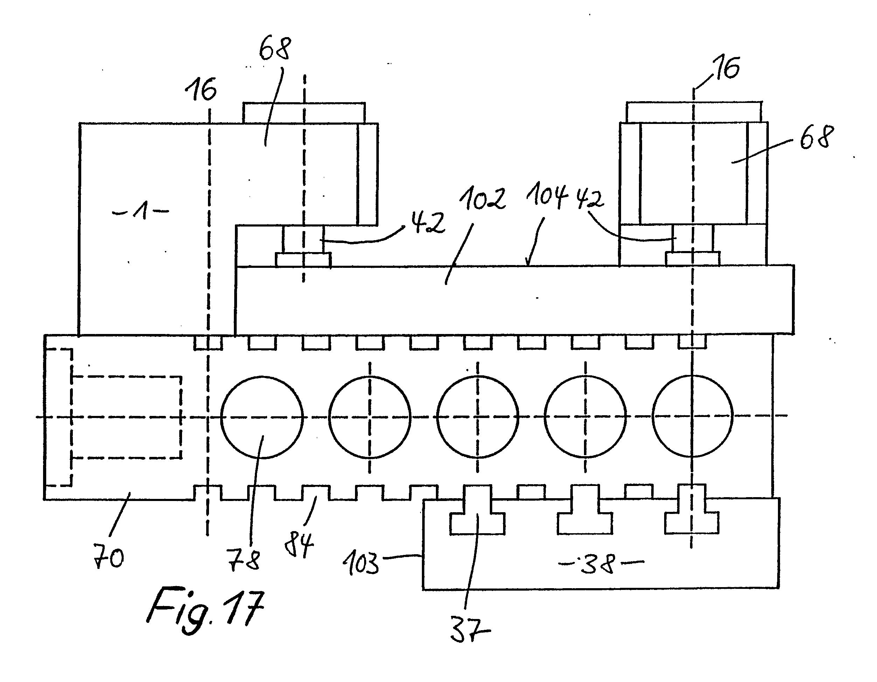

Bei dem Beispiel des in der Fig. 17 aufgespannten Werkstücks 102 dient ein prismatischer Körper 70 zur seitlichen Verlängerung des Spanntisches 38. Über nicht näher gezeigte Spannhilfsmittel wie z.B. Gewindestangen oder -bolzen ist der prismatische Körper 70 mit dem Spanntisch fest verbunden. Hierzu können neben den schon beschriebenen Gewindebohrungen 82 und 83 geeignete Durchgangsbohrungen (nicht dargestellt) vorgesehen sein, die eine Durchführung von Spannschrauben bis in die zugeordneten "T-Nuten-Steine" ermöglichen. Die Schraubenköpfe sind versenkt. Der Körper 70 ragt seitlich über den Rand 103 des Spanntisches 38 hinaus, wie das auch bei dem Werkstück 102 der Fall ist. Mit dem prismatischen Körper 70 in der zuvor beschriebenen Weise mit nicht näher dargestellten Spannhilfsmitteln, wie z.B. Gewindestangen oder -bolzen verbunden, sind die beiden erfindungsgemäßen Spannvorrichtungen 68, die das Werkstück 102 auf seiner Oberseite 104 mit ihren ausgefahrenen Kolbenstangen 42 festhalten.

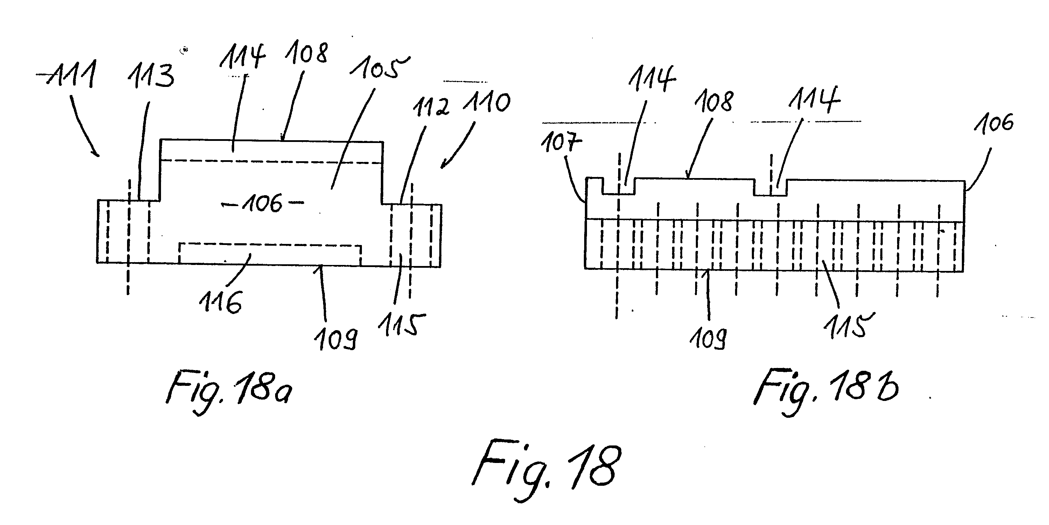

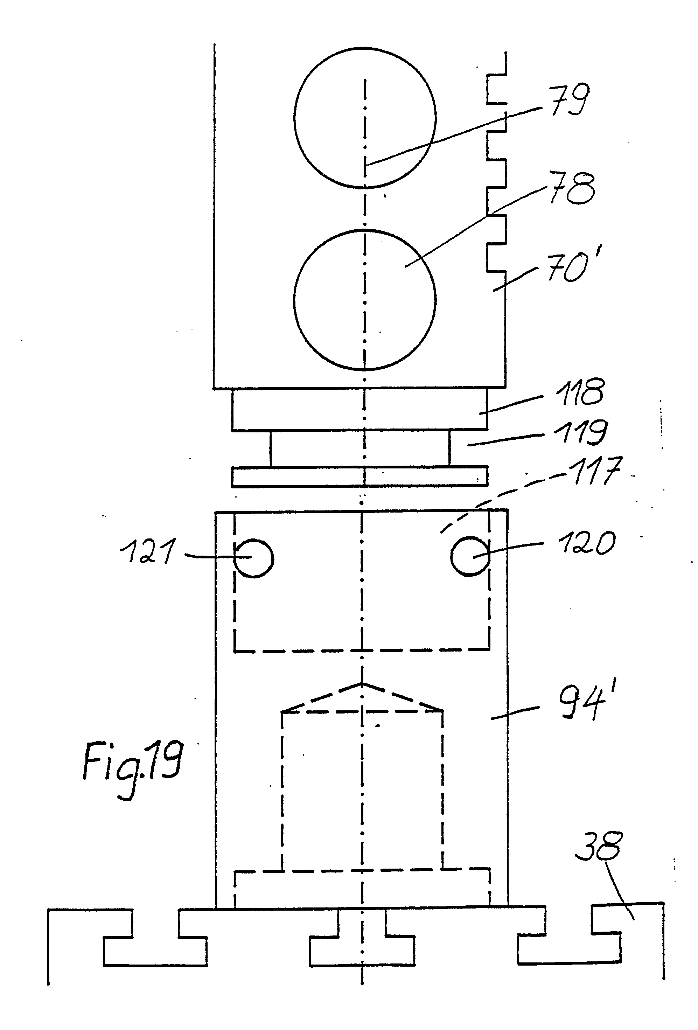

Bei dem in Fig. 18 dargestellten Gegenstand handelt es sich um ein geeignetes Spannhilfsmittel im Sinne der erfindungsgemäßen Vorrichtung, welches beispielhaft dazu vorgesehen ist, mit der Vorrichtung zusammenzuwirken. Es handelt sich um einen prismatischen Körper 105 mit den beiden Stirnflächen 106 und 107, sowie den einander gegenüberliegenden ebenen Seitenflächen 108 und 109, die jeweils die Ober- bzw. Unterseite des Körpers 105 bilden. Die beiden anderen, einander gegenüberliegenden Seitenflächen 110 und 111 weisen jeweils eine Stufe 112 und 113 auf. Während die obere Seitenfläche 108 von Nuten 114 durchzogen wird, von denen zwei in der Fig. 18 angedeutet sind, weisen die beiden Stufen 112 und 113 jeweils mehrere Durchgangsbohrungen 115 auf, die auf jeder Stufe 112 und 113 in einer Längsreihe nebeneinander angeordnet sind. Auf der unteren Stirnseite 109 ist noch eine Ausnehmung 116 vorgesehen, die die Form einer Nut oder einer flächenhaften Vertiefung hat. Der Körper 105 kann als Zwischenstück zwischen einem Werkstück und z.B. einer Spannvorrichtung 68 vorgesehen sein.

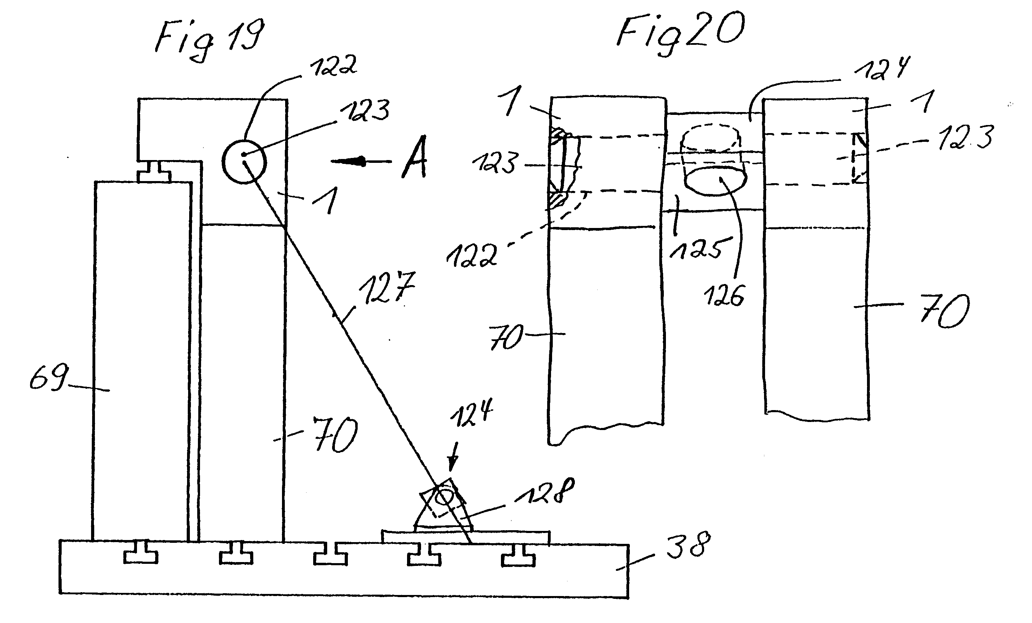

Figur 19 zeigt eine Spannvorrichtung mit einem prismatischen Körper 70′ ähnlich dem prismatischen Körper 70 aus Figur 7 oder Figur 14. Die prismatischen Körper 70 aus Figur 7 oder Figur 14 sind einstückig mit dem Spannzylinder 94 ausgebildet. Im Gegensatz hierzu ist in Figur 19 der prismatische Körper 70′ einerseits und der zugehörige Spannzylinder 94′ andererseits getrennt. Hierzu weist im Ausführungsbeispiel nach Figur 19 der Spannzylinder 94′ auf seiner dem Spanntisch 38 abgewandten Seite eine Einsenkung 117 auf, in welche ein entsprechender stirnseitiger Absatz 118 des prismatischen Körpers 70′ hineinpaßt. Einsenkung 117 einerseits und Absatz 118 andererseits bilden die Trennstelle zwischen prismatischem Körper 70′ und Spannzylinder 94′.

Der Absatz 118 weist eine Ringnut 119 auf. Der Spannzylinder 94′ weist beidseitig seiner Mittelachse 79 je eine parallel zur Oberfläche des Spanntisches 38 verlaufende zylindrische Bohrung 120 und 121 auf. Die zylindrischen Bohrungen 120 und 121 sind so angeordnet, daß bei eingesetztem Absatz 118 die Ringnut 119 so liegt, daß ein durch die zylindrischen Bohrungen 120 und 121 hindurchgeführter Stift etwa tangential zum Grund der Ringnut 119 verläuft, so daß bei in die zylindrischen Bohrungen 120 und 121 eingesetzten zylindrischen Stiften der prismatische Körper 70′ axial gefesselt und gesichert ist. Die in axialer Richtung auf den prismatischen Körper 70′ als Reaktionskräfte auf Spannkräfte auftretenden Kräfte, die dem prismatischen Körper 70′ vom Spannzylinder 94′ in axialer Richtung trennen wollen, werden dann über die Ringnut 119 und deren Wandung und über die Zylinderstifte und weiter über die Bohrungswandungen der zylindrischen Bohrungen 120 und 121 in das Gehäuse des Spannzylinders 94′ übertragen und damit letztendlich von dem T-Nuten-Stein, der von dem Spannzylinder 94′ gespannt wird, aufgenommen und in den Tisch 38 abgeleitet. Weist nun der prismatische Körper 70′ eine Spannvorrichtung 68 beispielsweise in der Anordnung nach Figur 7 auf, so kann nach einem Lösen dieser Spannvorrichtung 68 der prismatische Körper 70′ problemlos in eine andere Lage geschwenkt und das Werkstück leicht entnommen werden, ohne daß hierzu der Spannzylinder 94′ gelöst werden müßte. Vorteilhafterweise ist hierbei zwischen prismatischem Körper 70′ einerseits und dem Spannzylinder 94′ andererseits mindestens ein Rasterungsmittel zum wiederholgenauen Einfahren bestimmter Schwenkpositionen vorgesehen. Solche Rasterungsmittel sind allgemein bekannt. Es kann sich z.B. um eine federbelastete Kugel handeln, die mit einer entsprechenden Einsenkung oder Mulde in der Gegenfläche zusammenwirkt. Da vielfältige Konstruktionen solcher Rasterungsmittel allgemein zum Stand der Technik gehören, muß hierauf nicht mehr gesondert eingegangen werden.

Die erfindungsgemäße Spannvorrichtung kann in ihrer Anwendbarkeit auch dadurch erweitert werden, daß der prismatische Körper 70 oder 70′ einen dem Spannzylinder 96 zugeordneten Amboß aufweist, der lösbar mit dem prismatischen Körper 70 bzw. 70′ verbunden oder verbindbar ist. Dies könnte z.B. so aussehen, daß der Spannzylinder 96 mit dem zylindrischen Fortsatz 98 in eine Bohrung 78 des prismatischen Körpers 70′ oder 70 eingesetzt ist und daß ein Auflageteller oder Auflagekopf, der einen ebensolchen zylindrischen Fortsatz 98 aufweist, in einem gewünschten Abstand zum Spannzylinder 96 in eine weitere zylindrische Bohrung 79 eingesetzt ist. Hierauf könnte dann ein Werkstück aufgelegt werden, daß dann vom Spannzylinder 96 in dieser Lage gespannt werden könnte. Natürlich könnte ein solcher flacher Auflagetisch auch gabelförmig den prismatischen Körper 70 bzw. 70′ umfassen und hierbei mit den gabelförmigen Armen in den Nuten 84 geführt sein und hierdurch einen festen Halt erreichen. Es entsteht dann ein Auflagetisch, auf den wiederum ein Werkstück oder ein bestimmter Teil eines Werkstücks aufgelegt werden kann und von einem darüber angeordneten Spannzylinder 96 oder von einer Spannvorrichtung 68 gespannt werden kann.

Zur Minimierung der Zusatzteile ohne Einschränkung der Einsatzmöglichkeiten ist es auch möglich den eben erwähnten Spanntisch bzw. Auflagetisch dadurch zu erzeugen, daß beispielsweise die Spannvorrichtung 68 aus der in Figur 7 dargestellten Lage um 90° geschwenkt und in dieser Lage am prismatischen Körper 70, allerdings in tieferer Anordnung, anmontiert wird. Die dann horizontal liegenden Flächen der Spannvorrichtung 68 können ebenfalls als Auflagetisch dienen.

Die erfindungsgemäßen Spannzylinder können von einer externen Hydraulikstation mit Druckmittel versorgt werden. Es ist jedoch ebenso gut möglich eine kleine Kolbenpumpe als Anbauelemente oder ebenso als integrierten Bestandteil der erfindungsgemäßen Spannzylinder vorzusehen, ähnlich wie dies beispielsweise bei handbetätigten hydraulischen Wagenhebern der Fall ist. Durch den Einbau oder Anbei einer handbetätigten Kolbenpumpe wird die Einrichtung völlig unabhängig von irgendwelchen äußeren Energiequellen.

In Fig. 19 ist eine ähnliche Anordnung wie in Fig. 7 dargestellt. Bei Fig. 19 ist jedoch der prismatische Körper 1 auf die freie Stirnseite des prismatischen Körpers 70 aufgesetzt und dort über durch die Bohrungen 21 und 22 (Fig. 1b) geführte Schrauben verschraubt. Hierdurch kann der Arbeitsbereich erweitert und ein höheres Werkstück 69 eingespannt werden.

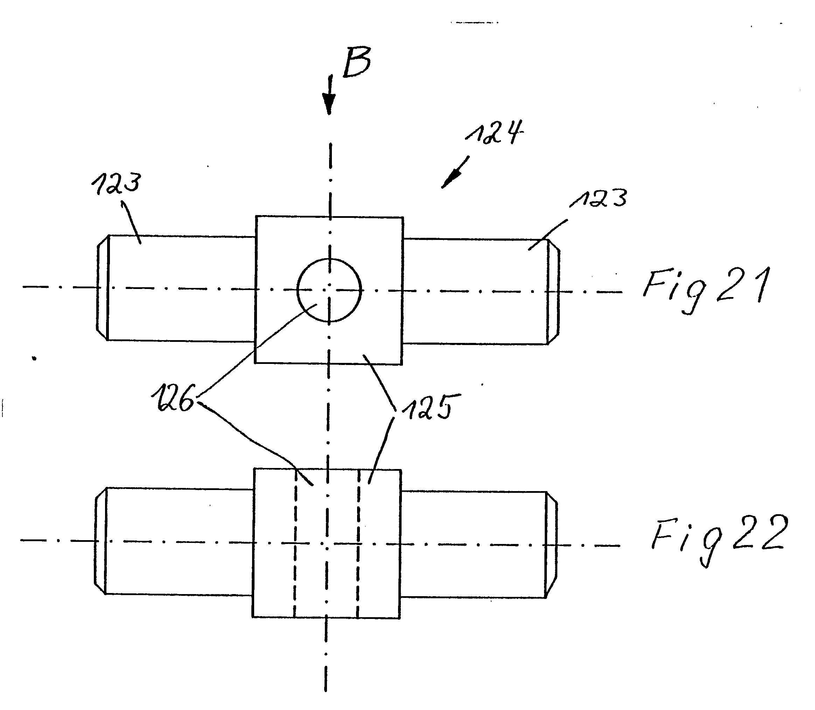

Wie Fig. 20 zeigt, können mehrere prismatische Körper 70 mit darauf oder daran angeordnetem weiteren prismatischen Körper 1 z.B. im Abstand zueinander nebeneinander angeordnet sein. Hierbei ist es dann besonders vorteilhaft, wenn die Seiten 10 des prismatischen Körpers eine in diesem Bereich den prismatischen Körper durchdringende Querbohrung aufweisen, deren Durchmesser so bemessen ist, daß sie den zylindrischen Fortsatz 123 eines Joches 124 aufnehmen können. Eine solche Anordnung ist in Fig. 20 dargestellt. Hierbei kann das Joch 124 (Fig. 21 und 22) ein z.B. würfelförmiges Mittelstück 125 aufweisen mit einer Querbohrung 126.

Verwendet in einer Anordnung nach Fig. 20 kann durch diese Querbohrung 126 hindurch ein Zugstab oder Knickstab mit einem entsprechenden Ansatz, der z.B. auch als Gewindeansatz ausgeführt sein kann, hindurchgeführt sein. Das zweite Ende dieses in Fig. 19 nur schematisch dargestellten Knickstabes 127 ist in eine entsprechende Querbohrung 126 eines gleichen Joches 124 eines Gegenlagers 128 eingesetzt. Das Gegenlager 128 ist wiederum am Spanntisch 38 befestigt, so daß eine Anordnung entsteht, wie sie in Fig. 19 zu erkennen ist. Hierdurch kann die gesamte in den Fig. 19 und 20 dargestellte Spannanordnung zusätzlich abgestützt werden.

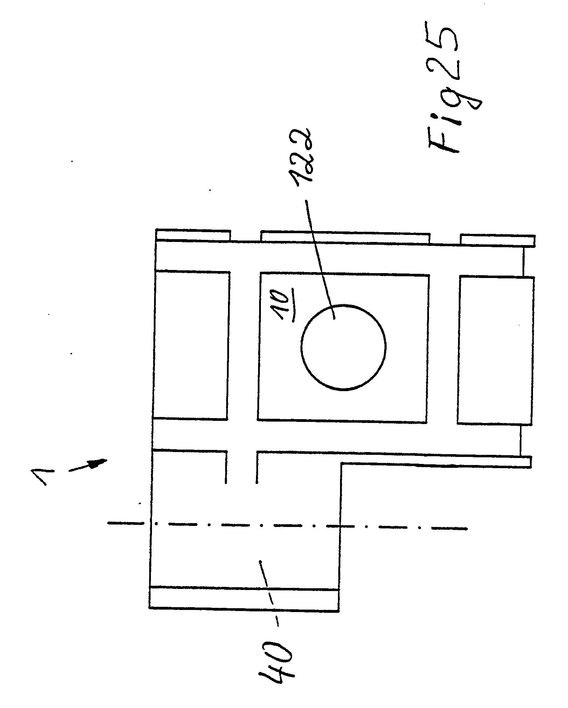

Die Anordnung der Querbohrung 122 am prismatischen Körper 1 kann der Fig. 25 entnommen werden, die den prismatischen Körper 1 in seinen wesentlichen Bestandteilen in Seitenansicht zeigt.

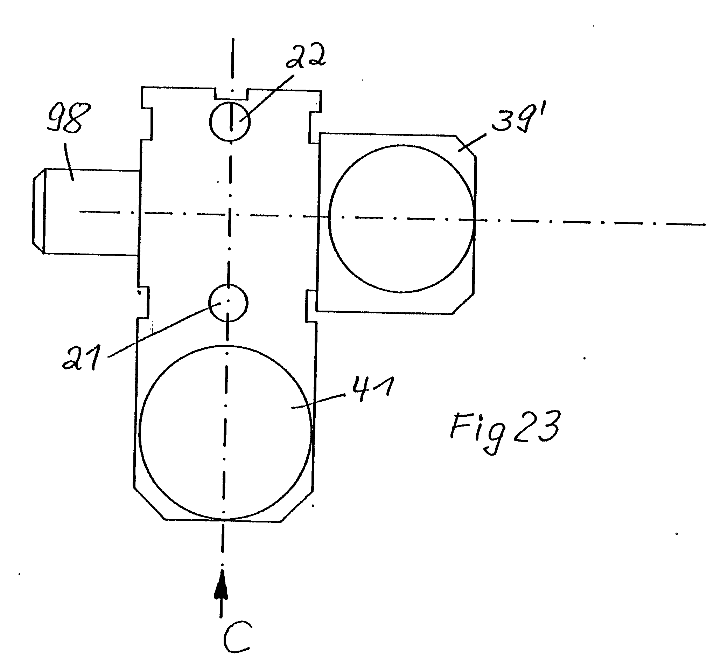

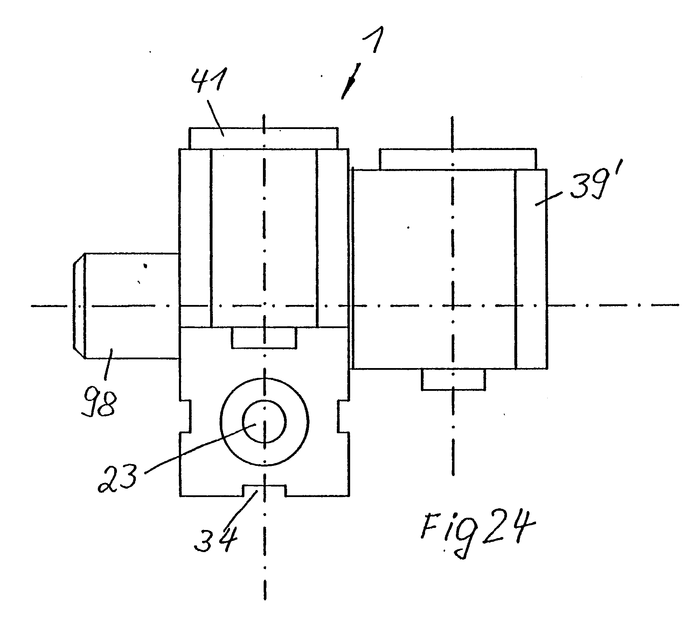

Die Querbohrung 122 ist aber nicht nur geeignet ein Joch 124 über dessen zylindrische Fortsätze 123 aufzunehmen. Die zylindrischen Fortsätze 123 des Joches 124 stimmen in ihren Durchmessermaßen überein mit dem zylindrischen Fortsatz 98 eines prismatischen Gehäuses 39′ mit dem Zylinder 96. Es kann daher auch eine Einrichtung, wie sie in den Fig. 15a und 15b dargestellt ist, nicht nur wie inFig. 16 gezeigt in die entsprechenden Bohrungen eines prismatischen Körpers 70 eingesetzt werden, sondern auch in die Querbohrung 122 des prismatischen Körpers 1, wie dies in den Fig. 23 und 24 dargestellt ist, wobei die Fig. 24 eine Ansicht der Fig. 23 in Richtung des Pfeils C darstellt. Durch eine solche Anordnung können die sich bietenden Spannmöglichkeiten beträchtlich erweitert werden.

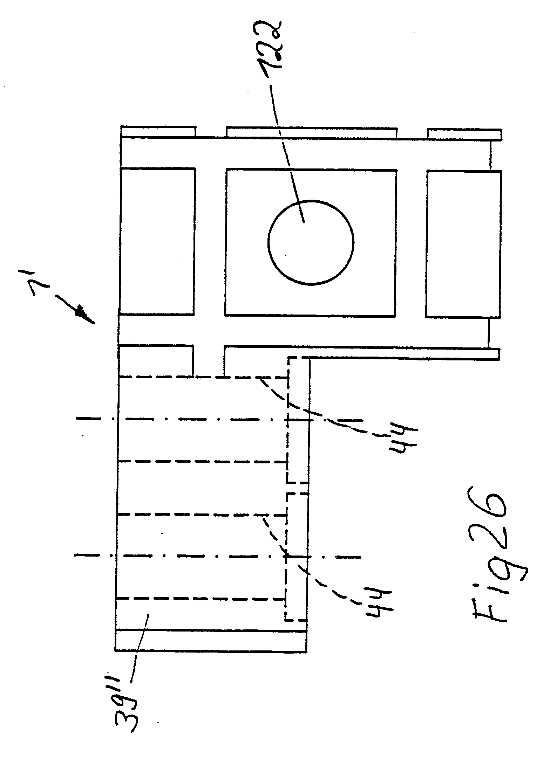

Fig. 26 schließlich zeigt einen prismatischen Körper 1′, der ganz ähnlich dem prismatischen Körper 1 aufgebaut ist. Im Falle der Ausbildung nach Fig. 26 weist jedoch das prismatische Gehäuse 39″ zwei parallel zueinander angeordnete Längsbohrungen 44 auf, die als Hydraulikzylinder jeweils einen entsprechenden Kolben 46 (Fig. 3b) aufnehmen können. Sie können mit unterschiedlichem oder mit gleichem Druck beaufschlagt werden und jeweils unterschiedliche Werkstücke oder beide ein gleiches Werkstück beaufschlagen.

Insgesamt ist es gelungen mit dem erfindungsgemäßen Gegenstand eine außerordentlich vielseitig einsetzbare Spannvorrichtung zu schaffen, deren Vielseitigkeit mit relativ wenigen und einfachen und damit preisgünstig herzustellenden Einzelteilen erreicht wird.

Liste der verwendeten Bezugszeichen

    1,1′ prismatischer Körper
    2 gerade Kante
    3 Kante
    4 Kante
    5 Kante
    6 Kante
    7 Kante
    8 Kante
    9 Kante
    10 Seitenfläche
    11 Seitenfläche
    12 Seitenfläche
    13 Seitenfläche
    14 Stirnfläche
    15 Stirnfläche
    16 Mittelachse
    17 Bohrung

    18 Bohrung
    19 Bohrung
    20 Bohrung
    21 Bohrung
    22 Bohrung
    23 Bohrung
    24 gerade Kante
    25 gerade Kante
    26 gerade Kante
    27 gerade Kante
    28 Längsnut
    29 Längsnut
    30 Längsnut
    31 Quernut
    32 Quernut
    33 Kreuzungspunkt
    34 Nut
    35 Öffnungsweite Nut
    36 Öffnungsweite Nut
    37 Spannnut
    38 Spanntisch
    39,39′ prismatisches Gehäuse
    39″ prismatisches Gehäuse
    40 Spannzylinder
    41 Zylinderdeckel
    42 Kolbenstange
    43 Stirnseite prismatisches Gehäuse
    44 Längsbohrung
    45 Abstand
    46 Kolben
    47 Längsnut
    48 unbenutzt
    49 Gewindebohrung
    50 Ringnut
    51 Deckel
    52 Gewindebohrung
    53 Bohrung
    54 Ringnut
    55 Abstufung des Kolbens
    56 Rückholfeder
    57 Anschluß Druckmittel
    58 Stirnseite
    59 Austrittsöffnung
    60 Anschluß
    61 Längsbohrung
    62 Innengewinde
    63 Zapfen
    64 prismatisches Spannstück
    65 prismatisches Spannstück
    66 kegeliges Spannstück
    67 Werkstück
    68 Vorrichtung
    69 Werkstück
    70,70′ prismatischer Körper
    71 Werkstück
    72 Werkstück
    73 Werkstück
    74 Werkstück

75 Werkstück
76 Werkstück
77 Seitenfläche
78 Bohrung
79 Mittelachse
80 Seitenfläche
81 Seitenfläche
82 Druchgangsbohrung
83 Gewindebohrung
84 Nut
85 Abstand
86 untere Stirnfläche
87 Bohrung
88 Kolben
89 Ringnut
90 Kolbenstange
91 Bohrung
92 Deckel
93 Anschluß
94,94′ Zylinder
95 Längsbohrung
96 Zylinder
97 Seitenfläche
98 zylindr. Fortsatz
99 Anschlußbohrung
100 Anschlußbohrung
101 Werkstück
102 Werkstück
103 Rand des Spanntisches
104 Oberseite des Werkstücks
105 prismatischer Körper
106 Stirnfläche
107 Stirnfläche
108 Seitenfläche
109 Seitenfläche
110 Seitenfläche
111 Seitenfläche
112 Stufe
113 Stufe
114 Nut
115 Durchgangsbohrung
116 Ausnehmung
117 Einsenkung
118 Absatz
119 Ringnut
120 zylindr. Bohrung
121 zylindr. Bohrung
122 Querbohrung
123 zylindrischer Fortsatz
124 Joch
125 Mittelstück
126 Querbohrung
127 Knickstab
128 Gegenlager

**Ansprüche**

1. Vorrichtung zum Spannen von Werkstücken auf einem Spannnuten zum Eingriff von Spannhilfsmitteln aufweisenden Spanntisch, insbesondere Spanntisch von Werkzeugmaschinen, gekennzeichnet durch einen prismatischen Körper (1,1′,70,70′), der eine Mittelachse (16,79) aufweist und von geraden Kanten (2,3,4,5,6,7,8,9,24,25,26,27) begrenzt wird, welche die Seitenflächen (10,11,12,13,77,80,81) und Stirnflächen (14,15, 86) des Körpers (1,70,70′) umschließen, mit wenigstens einer Bohrung (17,18,19,20,21,22,23,78,82,83) mit kreisrundem Querschnitt, die den Körper (1,70,70′) zumindest teilweise durchdringt und von einer der Flächen (10,11,12,13,14, 15,77,80,81,86) ausgeht und/oder wenigstens einer Nut (28,29,30,31, 32,34,84) mit rechteckigem Querschnitt, die eine der Flächen (10,11,12,13,14, 15,77,80,81,86) durchläuft, wobei sich die Bohrung (17,18,19,20,21,22,23,78,82,83) und/oder die Nut (28,29,30,31,32,34, 84) jeweils parallel und im Abstand (85) zu mehreren der Kanten (2,3,4,5,6,7,8,9,24,25,26,27) erstreckt, sowie wenigstens einem von einem Druckmittel beaufschlagbaren Zylinder (40,94,94′96), der senkrecht zu einer Ebene, in der eine Stirnfläche liegt, (14,15,86) orientiert ist und in den Körper (1,70,70′) integriert oder über wenigstens einen Teil von einer der Seitenflächen (10,11,12,13,77,80, 81) mit dem Körper (1,70,70′) starr oder lösbar verbunden ist und dessen Kolbenstange (42, 90) mit Spannhilfsmitteln (64, 65, 66) verbindbar ist.

2. Vorrichtung nach Anspruch 1, dadurch gekennzeichnet, daß auf einer Fläche (10,11,12,13,14,15,77,80,81,86) mehrere Bohrungen (17,18,19, 20,21,22,23,78,82,83) vorgesehen sind, die zueinander parallel sind.

3. Vorrichtung nach einem der Ansprüche 1 und 2, dadurch gekennzeichnet, daß auf einer Fläche (10,11,12,13,14,15,77,80,81,86) mehrere Nuten (28,29,30,31,32, 34,84) vorgesehen sind, die zueinander parallel sind.

4. Vorrichtung nach einem der Ansprüche 2 und 3, dadurch gekennzeichnet, daß jeweils die Bohrungen (17,18,19,20,21,22,23,78,82,83) und jeweils die Nuten (28,29,30,31,32,34,84) gleichgroße Abstände voneinander haben.

5. Vorrichtung nach Anspruch 2, dadurch gekennzeichnet, daß die Bohrungen (17,18,19,20,21,22,23,78,82,83) von wenigstens einer der Flächen (10,11,12,13,14,15,77,80,81,86) gleiche Durchmesser haben.

6. Vorrichtung nach Anspruch 5, dadurch gekennzeichnet, daß die Bohrungen (17,18,19, 20,78,82,83) von aneinander angrenzenden Seitenflächen (10,11,12,13,77,80,81) unterschiedliche Durchmesser haben.

7. Vorrichtung nach einem der Ansprüche 1,2,4,5 und 6, dadurch gekennzeichnet, daß die Bohrungen (17,18,19,20,21,22,23,78,82,83) in wenigstens einer Reihe liegen.

8. Vorrichtung nach einem der Ansprüche 1,2,4,5 und 6, dadurch gekennzeichnet, daß wenigstens eine der Bohrungen (83) ein Innengewinde aufweist.

9. Vorrichtung nach den Ansprüchen 7 und 8, dadurch gekennzeichnet, daß die Bohrungen (82, 83) von wenigstens einer der Seitenflächen (80, 81) entlang einer Reihe abwechselnd als Durchgangsbohrung (82) und als Gewindebohrung (83) ausgebildet sind.

10. Vorrichtung nach einem der vorhergehenden Ansprüche 1 bis 9, dadurch gekennzeichnet, daß wenigstens eine der Bohrungen (17,18,19,20,21,22,82,83) auf dem Grund von wenigstens einer der Nuten (28,29,30,31,34,84) mündet.

11. Vorrichtung nach Anspruch 5, dadurch gekennzeichnet, daß wenigstens eine der den Seiten- (11) und/oder Stirnflächen (14) zugeordneten Bohrungen (23) eine Senkung aufweist.

12. Vorrichtung nach Anspruch 7, dadurch gekennzeichnet, daß wenigstens eine Bohrung (17,18,19,20,21,22,23,78,82,83) oder Reihe von Bohrungen von wenigstens einer Fläche (10,11,12,13,14,15,77,80,81, 86) in gleichgroßen Abständen (85) zu einander parallelen Kanten (2,3,4,5,6,7,8,9,24,25,26,27) verläuft, welche den Körper (1,70) begrenzen.

13. Vorrichtung nach Anspruch 7, dadurch gekennzeichnet, daß wenigstens eine Bohrung (17,18,19,20,21,22,23,78,82,83) oder Reihe von Bohrungen einer Fläche (10,11,12,13,14,15,77,80,81,86) in ungleichen Abständen zu einander parallelen Kanten (2,3,4,5,6,7,8,9,24,25,26,27) verläuft, welche den Körper (1,70) begrenzen.

14. Vorrichtung nach den Ansprüchen 1 und 3, dadurch gekennzeichnet, daß die Nuten (28,29,30,31,32,34,84) die gleiche Breite (35) haben wie die Öffnungsbreite (36) der Spannnuten (37) des Spanntisches (38).

15. Vorrichtung nach Anspruch 1, dadurch gekennzeichnet, daß der in den prismatischen Körper (70) integrierte Spannzylinder (94) sich von einer der Stirnflächen (86) des Körpers (70) ausgehend in das Innere des Körpers (70) erstreckt.

16. Vorrichtung nach Anspruch 15, dadurch gekennzeichnet, daß die Längsachse des Spannzylinders (94,94') mit der Mittelachse (79) des prismatischen Körpers (70,70') zusammenfällt.

17. Vorrichtung nach Anspruch 15, dadurch gekennzeichnet, daß die Längsachse des Spannzylinders (94) zur Mittelachse (79) des prismatischen Körpers (70) im Abstand parallel verläuft.

18. Vorrichtung nach Anspruch 1, dadurch gekennzeichnet, daß der mit dem prismatischen Körper (1,70,70') verbundene Zylinder (40,96) in einem prismatischen Gehäuse (39,39',39") angeordnet ist.

19. Vorrichtung nach Anspruch 18, dadurch gekennzeichnet, daß das Gehäuse (39,39") mit dem prismatischen Körper (1) einstückig ausgebildet ist.

20. Vorrichtung nach Anspruch 18, dadurch gekennzeichnet, daß das Gehäuse (39') einen von einer seiner Seitenflächen (97) ausgehenden Fortsatz (98) aufweist.

21. Vorrichtung nach Anspruch 20, dadurch gekennzeichnet, daß der Fortsatz (98) des Gehäuses (39') zylinderförmig ausgebildet und zum Eingriff in wenigstens eine der Bohrungen (78) des prismatischen Körpers (70,70') vorgesehen ist.

22. Vorrichtung nach einem der Ansprüche 1 und 15 bis 21, dadurch gekennzeichnet, daß der Kolben (46, 88) des jeweiligen Zylinders (40,94,94'96) einseitig von Druckmittel beaufschlagbar ist.

23. Vorrichtung nach einem der Ansprüche 1 und 15 bis 21, dadurch gekennzeichnet, daß der Kolben (46,88) des jeweiligen Zylinders (40,94,94',96) zweiseitig von Druckmittel beaufschlagbar ist.

24. Vorrichtung nach einem der Ansprüche 22 und 23, dadurch gekennzeichnet, daß in dem prismatischen Körper (1,70) und/oder in dem Gehäuse (39,39') Anschlüsse (57,100) für die Zuleitung und das Rückfließen des Druckmittels vorgesehen sind.

25. Vorrichtung nach Anspruch 1, dadurch gekennzeichnet, daß das Druckmittel eine Flüssigkeit oder ein Gas ist.

26. Vorrichtung nach Anspruch 1, dadurch gekennzeichnet, daß die Kolbenstange (42,90) des Zylinders (40,94,94',96) eine Längsbohrung (61,95) aufweist, die sich in Richtung der Längsachse des Zylinders (40,94,94',96) erstreckt.

27. Vorrichtung nach Anspruch 26, dadurch gekennzeichnet, daß die Bohrung (61,95) mit einem Innengewinde (62) versehen ist.

28. Vorrichtung nach Anspruch 1, dadurch gekennzeichnet, daß wenigstens ein weiterer prismatischer Körper (105) vorgesehen ist, der Bohrungen (115) und/oder Nuten (114) aufweist und mit dem prismatischen Körper (1,70,70') verbindbar ist.

29. Vorrichtung nach Anspruch 2, dadurch gekennzeichnet, daß die Bohrungen (17,18,19,20,21,22,23,78,82,83) von wenigstens einer der Flächen (10,11,12,13,14,15,77,80,81,86) ungleiche Durchmesser haben.

30. Vorrichtung nach einem der Ansprüche 1 bis 29, dadurch gekennzeichnet, daß zur Herstellung einer lösbaren und schwenkbaren Verbindung koaxial zur Mittelachse (79) entweder der prismatische Körper (70') oder der Zylinder (94') eine Einsenkung (117) und der andere Teil einen in die Einsenkung (117) passenden Absatz (118) aufweist, wobei der Absatz (118) eine Ringnut (119) aufweist, während die Wand der Einsenkung (117) beidseits der Mittelachse (79) von je einer zylindrischen Bohrung (120, 121) durchbohrt ist, so daß bei in die Einsenkung (117) eingesetztem Absatz (118) ein in eine der Bohrungen (120, 121) eingesetzter und passender zylindrischer Stift in die Ringnut (119) eingreift und damit den prismatischen Körper (70') und den Zylinder (94') miteinander lösbar und schwenkbar verbindet.

31. Vorrichtung nach Anspruch 30, dadurch gekennzeichnet, daß zwischen prismatischem Körper (70') einerseits und Zylinder (94') andererseits Rasterungsmittel zum wiederholgenauen Einfahren bestimmter Schwenkpositionen vorgesehen sind.

32. Vorrichtung nach einem der Ansprüche 1 bis 18 und 20 bis 31, dadurch gekennzeichnet, daß der prismatische Körper (70,70') einen dem Spannzylinder (96) zugeordneten Amboß aufweist, der lösbar mit dem prismatischen Körper (70,70') verbunden oder verbindbar ist.

33. Vorrichtung nach einem der Ansprüche 1 bis 32, dadurch gekennzeichnet, daß am prismatischen Körper (1,70,70') angeordnet oder in diesen integriert, eine von Hand betätigbare Kolbenpumpe zur Erzeugung des Spanndruckes vorgesehen ist.

34. Vorrichtung nach Anspruch 18, dadurch gekennzeichnet, daß die Seitenflächen (10) des prismatischen Körpers (1) eine in diesem Bereich den prismatischen Körper (1) durchdringende Querbohrung (122) aufweisen, deren Durchmesser so bemessen ist, daß sie den zylindrischen Fortsatz (98;123) des prismatischen Gehäuses (39') oder eines Jochs (124) aufnehmen kann.

Fig. 1a

Fig. 1b

Fig. 1c

Fig. 1

Fig. 2a

Fig. 2

Fig. 2b

Fig. 4

Fig. 4b

Fig. 4a

Fig. 4c

Fig. 3

Fig. 3a

Fig. 3b

Fig. 3c

Fig.6a

Fig.6b

Fig.6

Fig.5a

Fig.5b

Fig.5c

Fig.5

Fig. 7

Fig. 8

Fig. 9

Fig. 10a

Fig. 10

Fig. 10b

**Fig. 11**

**Fig. 12**

*Fig. 13*

EP 0 390 096 A2

Fig. 14a

Fig. 14

Fig. 14b

Fig. 14c

EP 0 390 096 A2

Fig. 15a

Fig. 15

Fig. 15b

Fig 16

Fig. 17

EP 0 390 096 A2

Fig. 18b

Fig. 18

Fig. 18a

Fig.19

# Fig 19

# Fig 20

EP 0 390 096 A2

Fig 21

Fig 22

123

124

125

126

B

98

22

39'

21

41

Fig 23

C

EP 0 390 096 A2

Fig 24

Fig 25

EP 0 390 096 A2

EP 0 390 096 A2

39″

7′

122

44

44

Fig 26